# EUROPÄISCHE PATENTSCHRIFT

(11) **EP 4 009 839 B1**
(45) Veröffentlichungstag und Bekanntmachung des Hinweises auf die Patenterteilung: **13.09.2023**
(21) Anmeldenummer: 20732527.5
(22) Anmeldetag: 08.06.2020
(51) Int. Cl.: A47J 31/44

(54) **VORRICHTUNG ZUM ERHITZEN UND AUFSCHÄUMEN EINER FLÜSSIGKEIT, INSBESONDERE EINES GETRÄNKS**
APPARATUS FOR HEATING AND FOAMING A LIQUID, IN PARTICULAR A BEVERAGE
APPAREIL DE CHAUFFAGE ET DE MOUSSAGE D'UN LIQUIDE, EN PARTICULIER D'UNE BOISSON

(30) Priorität: 07.08.2019 DE 202019104349 U
(43) Veröffentlichungstag der Anmeldung: 15.06.2022
(73) Patentinhaber: Eversys S.A., 3960 Sierre (CH)
(72) Erfinder: LOCHER, Grégoire, 1976 Daillon (CH); ROBYR, Sébastien, 3960 Sierre (CH)
(74) Vertreter: Charrier Rapp & Liebau
(86) Internationale Anmeldenummer: PCT/EP2020/065822
(87) Internationale Veröffentlichungsnummer: WO 2021/023413

(56) Entgegenhaltungen:
- WO-A1-2017/063936
- DE-A1-102015 117 650

## Beschreibung

Die Erfindung betrifft eine Vorrichtung zum Erhitzen und Aufschäumen einer Flüssigkeit, insbesondere eines Getränks, nach dem Oberbegriff des Anspruchs 1. Die Vorrichtung kann insbesondere zum Erhitzen und Aufschäumen von Milch verwendet werden, beispielsweise für die Herstellung von milchhaltigen Heißgetränken, wie z.B. Cappuccino, Latte Macchiato, oder Kakaogetränken.

Eine Vorrichtung zum Erhitzen und Aufschäumen eines Getränkeprodukts, insbesondere Milch, ist aus der DE 10 2011 077 776 A1 bekannt. Diese Vorrichtung umfasst einen Dampferzeuger, eine Druckluftquelle mit einer Luftzuleitung zum Zuleiten von Druckluft von der Druckluftquelle zum Dampferzeuger und eine mit dem Dampferzeuger verbundene Dampf-/Luftleitung zum Zuleiten eines Dampf-/Luftgemischs vom Dampferzeuger in das Getränkeprodukt. An der Luftzuleitung und/oder der Dampf-/Luftleitung ist (jeweils) ein Absperrelement, beispielsweise in Form eines Ventils, vorgesehen. Die Vorrichtung ermöglicht ein verbessertes Aufschäumen des Getränkeprodukts, indem die Druckluft direkt von der Druckluftquelle in den Dampferzeuger geführt wird. Dadurch wird bereits im Dampferzeuger ein erhitztes Dampf-/Luftgemisch bereitgestellt, wodurch eine Kondensation von Flüssigkeit in der Dampfleitung reduziert werden kann. Durch Öffnen und Schließen der Absperrelemente in der Luftzuleitung bzw. der Dampf-/Luftleitung kann der Luftstrom bzw. der Strom des Dampf-/Luftgemisches in das Getränkeprodukt gesteuert und geregelt werden.

Eine weitere Vorrichtung zum Erhitzen und Aufschäumen von Milch, insbesondere zum Zubereiten von Cappuccino in einer Kaffeemaschine, ist in der EP 1 501 398 A1 beschrieben. Diese Vorrichtung umfasst einen dampferzeugenden Heißwasserbereiter, ein Fördermittel mit einem offenen Ende, welches in ein Milch enthaltendes Gefäß getaucht werden kann, eine Dampfleitung zum Zuführen von Dampf, welche zwischen dem Heißwasserbereiter und dem Fördermittel geschaltet ist, ein Absperrelement, eine Druckluftquelle, eine zwischen der Druckluftquelle und dem Fördermittel geschaltete Druckluftleitung zur Zuführung von Druckluft in das Fördermittel, einen Temperatursensor, der mit dem in die Milch eintauchbaren Ende des Fördermittels verbunden ist, um die Temperatur der Milch in dem Gefäß zu erfassen, sowie eine Steuereinheit, die mit dem Absperrelement, der Druckluftquelle und dem Temperatursensor gekoppelt und so programmiert ist, dass ein Öffnen und Schließen des Absperrelements und die Betätigung der Druckluftquelle unabhängig voneinander und entsprechend der gewünschten Temperatur und/oder der Aufschäumung der Milch gesteuert werden kann. Dadurch kann die Milch auf eine benötigte Temperatur erhitzt werden und mit einem vorgegebenen Schaum-/Flüssigkeits-Verhältnis aufgeschäumt werden. Das Schaum-/Flüssigkeits-Verhältnis der aufgeschäumten Milch kann dadurch in gewissem Umfang den Bedürfnissen angepasst werden.

Die bekannten Vorrichtungen zum Erhitzen und Aufschäumen von Getränken, insbesondere von Milchgetränken, ermöglichen zwar ein automatisches Erhitzen und Aufschäumen des Getränks unter Einhaltung einer vorgegebenen Getränketemperatur. Allerdings ist die Vorgabe bzw. Erzeugung einer gewünschten Konsistenz des aufgeschäumten Getränks und insbesondere eines vorgegebenen Schaum/Flüssigkeits-Verhältnis des erzeugten Schaums nur bedingt möglich. Zur Erzeugung einer gewünschten Konsistenz mit einem vorgegebenen Verhältnis des Schaums zur Flüssigkeit des aufgeschäumten Getränks sind in der Steuereinheit der bekannten Vorrichtungen vorgegebene Steuerprogramme einprogrammiert, so dass ein Bediener eine gewünschte Schaumtemperatur und -konsistenz durch Auswahl eines der Steuerprogramme vorgeben kann, woraufhin eine automatisierte Steuerung der Vorrichtung entsprechend dem ausgewählten Steuerprogramm erfolgt. Dies gewährleistet zwar einerseits einen vollautomatisierten Ablauf. Andererseits kann ein Bediener nicht mehr in den Ablauf eingreifen, was beispielsweise notwendig wird, wenn sich schon während des Aufschäumens zeigt, dass die gewünschte Schaumkonsistenz nicht erzielt werden kann. Darüber hinaus ist der Bediener an die vorprogrammierten Steuerprogramme gebunden und kann keine individuelle Zusammensetzung der aufgeschäumten Flüssigkeit in Bezug auf ihre Temperatur und Schaumkonsistenz sowie weitere Eigenschaften des Schaums erzeugen.

Es ist jedoch bekannt, dass die Schaumbildungseigenschaften von Milch neben der Aufschäumtemperatur auch ganz wesentlich von den Eigenschaften der verwendeten Milch abhängen, wie z.B. vom Fettgehalt, von der der Pasteurisierung bzw. der thermischen Vorbehandlung (Kurzzeit-, Hoch- oder Ultrahocherhitzung), dem pH-Wert, dem Proteingehalt und der Lagerungszeit, wie bspw. in der Dissertation von Katja Borcherding, Universität Kiel, "Untersuchungen zur Charakterisierung der Makro- und Mikrostruktur von Milchschäumen" (November 2004) beschrieben. Es ergibt sich daher ein Bedürfnis, die bekannten Vorrichtungen zum Erhitzen und Aufschäumen von Milch dahingehend zu verbessern, dass sich Flüssigkeitsschäume und insbesondere Milchschäume mit einer individuell gewünschten und unterschiedlichen Konsistenz und Standhaftigkeit herstellen lassen.

Eine Möglichkeit, die Konsistenz und Standhaftigkeit von aufgeschäumter Milch kontrolliert zu beeinflussen, besteht in der Einleitung von Druckpulsen mit variabler Frequenz, Pulsdauer und Amplitude zusammen mit einem Dampfstrom in die aufzuschäumende Milch. Aus der EP 1776905 B1 und der DE 10 2015 117 650 A1 sind Vorrichtungen zum Erhitzen und Aufschäumen von Milch oder Milchgetränken bekannt, in denen Druckluftpulse zusammen mit einem Dampfstrom in die Milch bzw. das Milchgetränk eingeleitet werden. Durch Anpassung der Frequenz, der Amplitude und/oder der Pulsdauer der Druckluftpulse kann dabei die Konsistenz des erzeugten Milchschaums angepasst werden, wie in der DE 10 2015 117 650 A1 offenbart.

Es hat sich allerdings gezeigt, dass die Einleitung von scharfen Druckluftpulsen in die Milch bzw. das Milchgetränk zu einem pulsierenden Aufschäumen der Milch in dem zur Aufnahme der Milch bzw. des Milchgetränks vorgesehenen Behälter und dadurch bedingt zu einem Herausspritzen von Flüssigkeit aus dem Behälter kommen kann, wenn die Milch in einem Aufnahmebehälter, bspw. einer Tasse oder in einem pitcher, aufgeschäumt wird. Beim gleichzeitigen Erhitzen und Aufschäumen von Milch in einer Misch- bzw. Erhitzereinheit, der kalte Milch sowie ein Gemisch von heißem Dampf mit Druckpulsen eines Druckgases zugeführt wird, verursachen die scharfen Druckpulse ein inhomogenes Vermischen der Flüssigkeit mit dem Dampf-/Druckgasgemisch.

Hiervon ausgehend liegt der Erfindung die Aufgabe zugrunde, eine Vorrichtung und ein Verfahren zum Erhitzen und Aufschäumen einer Flüssigkeit aufzuzeigen, mit denen der Bediener einerseits eine hohe Flexibilität in Bezug auf eine kontrollierte Einstellung der Eigenschaften des gebildeten Schaums wie z.B. seine Konsistenz, Cremigkeit, Porosität, Schaumdichte, und Schaumstabilität (Drainage) hat und andererseits das Herausspritzen von Flüssigkeit aus dem Aufnahmebehälter während des Aufschäumens verhindert wird. Weiterhin soll beim gleichzeitigen Erhitzen und Aufschäumen einer Flüssigkeit mit einem Dampf-/Druckgasgemisch in einer Misch- bzw. Erhitzereinheit eine möglichst homogene Vermischung der Flüssigkeit mit dem Dampf-/Druckgasgemisch sicher gestellt werden. Die Eigenschaften des gebildeten Schaums sollen dabei weiterhin möglichst genau, konsistent und wiederholbar einstellbar sein.

Diese Aufgaben werden mit einer Vorrichtung mit den Merkmalen des Anspruchs 1 sowie mit einem Verfahren mit den Merkmalen des Anspruchs 13 gelöst. Bevorzugte Ausführungsformen der Vorrichtung und des Verfahrens sind den abhängigen Ansprüchen zu entnehmen.

Die erfindungsgemäße Vorrichtung zum Erhitzen und Aufschäumen einer Flüssigkeit umfasst einen Dampfleitung, eine Druckgasleitung und ein mit der Dampfleitung und der Druckgasleitung in Verbindung stehendes Fördermittel zur Erzeugung und Überführung eines Dampf-/Gasgemischs in die Flüssigkeit. Zur Überführung des Dampfs, der von einem mit der Dampfleitung verbundenen Dampferzeuger bereit gestellt wird, in das Fördermittel ist das Fördermittel über die Dampfleitung mit dem Dampferzeuger verbindbar. Entsprechend ist das Fördermittel über die Druckgasleitung mit einer Druckgasquelle verbindbar, um das Fördermittel mit einem Druckgasstrom zu beaufschlagen, der von der Druckgasquelle bereit gestellt wird. Die Vorrichtung enthält dabei ein steuerbares Schaltventil, das aus dem in der Druckgasleitung unter einem vorgegebenen, konstanten Druck stehenden Druckgasstrom Druckpulse erzeugt und in eine Expansionskammer des Fördermittels mit einer am stromabwärtigen Ende der Expansionskammer befindlichen Düse leitet.

Das Schaltventil wird hierfür bevorzugt periodisch mit einer einstellbaren Frequenz geöffnet und geschlossen, wodurch von dem Schaltventil Druckpulse von komprimiertem Gas, bspw. Druckluft, erzeugt werden. In der Expansionskammer des Fördermittels können die eingeleiteten Druckpulse des Druckgases expandieren und werden durch die stromabwärtige Düse ausgestoßen. Die Expansionskammer weist dabei einen (wesentlich) größeren Durchmesser (bzw. Strömungsquerschnitt) auf als die Druckgasleitung und die Düse.

Die Expansionskammer und die Düse wirken dabei als Dämpfungsglied ("snubber") zusammen und dämpfen den Druckverlauf der in die Expansionskammer eingeleiteten Druckpulse. Das aus der Expansionskammer und der Düse zusammengesetzte Dämpfungsglied ("snubber") hat auf die Druckpulse eine dämpfende Wirkung, wie bei einem pneumatischen Pulsationsdämpfer bzw. analog zu einem RC-Dämpfungsglied in einem elektrischen Schaltkreis, wobei die Expansionskammer analog zu einem elektrischen Kondensator und die Düse analog zu einem elektrischen Widerstand wirkt. Dadurch ergibt sich ein gedämpfter zeitlicher Druckverlauf p(t) des durch die Düse aus der Expansionskammer strömenden Dampf-/Gasgemischs mit gedämpften, sich periodisch wiederholenden Druckspitzen p0. Durch die Dämpfung der Druckspitzen kann ein ungewolltes Herausspritzen von Flüssigkeit aus dem die Flüssigkeit aufnehmenden Behälter vermieden werden.

Der durch die Düse aus der Expansionskammer strömende Druckgasstrom weist bevorzugt einen zeitlichen Druckverlauf p(t) mit sich periodisch wiederholenden und plateauförmig abgeflachten Druckspitzen (p0) auf, wobei jede Druckspitze (p0) bis zur zeitlich nachfolgenden Druckspitze einen exponentiell abfallenden Druckverlauf hat. Der zeitliche Abfall des Druckverlaufs einer Druckspitze, also der Dämpfungsgrad, wird dabei durch die Dimensionierung der Expansionskammer und der Düse, insb. durch das Volumen der Expansionskammer und dem Strömungsquerschnitt der Düse bestimmt und kann über die Relation p(t) = p0 e ^{-t/τ} beschrieben werden, wobei die Zeitkonstante τ vom Volumen der Expansionskammer und dem Strömungsquerschnitt der Düse abhängt. Die Höhe der (plateauförmig abgeflachten) Druckspitzen (p0) ist von dem konstanten Druck des Druckgases abhängig, der von der Druckgasquelle geliefert wird. Zweckmäßig ist stromaufwärts des Schaltventils ein einstellbarer Druckminderer in dem Fördermittel oder der der Druckgasleitung vorgesehen, mit dem der Druck des dem Schaltventil zugeführten Druckgasstroms eingestellt und konstant gehalten werden kann.

Der durch die Düse aus der Expansionskammer strömende Druckgasstrom hat dabei einen zeitlichen Druckverlauf p(t) mit einem konstanten Druck-Offset (p1). Der zeitliche Druckverlauf p(t) des Druckgasstroms setzt sich also aus dem konstanten Druck-Offset p1 und den gedämpften Druckspitzen p0 zusammen: p(t) = p1 + p0.

Die Parameter der durch periodisches Öffnen und Schließen des Schaltventils erzeugten Druckpulse, wie Pulsdauer und Wiederholrate (Pulsfrequenz), können dabei zweckmäßig verändert und von einem Bediener an der Vorrichtung, beispielsweise mittels Schalt- oder Drehknöpfen, eingestellt werden. Das Schaltventil kann dabei zweckmäßig als pulsweitenmoduliert ansteuerbares Magnetventil ausgebildet sein, um eine schnelle und genaue Ansteuerung zu ermöglichen. Das Schaltventil kann dabei periodisch mit einer vorgegebenen Dauer (Pulslänge bzw. Pulsdauer) und Wiederholrate (Pulsfrequenz) geöffnet und geschlossen werden. Dabei ist es auch möglich, unterschiedliche Öffnungs- und Schließzeiten für das Schaltventil vorzugeben. Die vorgegebenen Öffnungs- oder Schließzeiten für das Schaltventil definieren dabei die Pulsdauer der Druckpulse. Die Amplitude der erzeugten Druckpulse ergibt sich aus dem (vorgegebenen und zweckmäßig über den Druckminderer einstellbaren) Druck, der permanent in der Druckgasleitung ansteht.

Das Schaltventil ist in dem Fördermittel stromaufwärts der Expansionskammer angeordnet. Der von einem Hubkolbenverdichter bereitgestellte Druckgasstrom wird über die Druckgasleitung durch das im Fördermittel angeordnete Schaltventil in die Expansionskammer eingeleitet. Das Schaltventil wird zur Erzeugung von Druckpulsen periodisch geöffnet und geschlossen.

Zur Erzeugung eines Dampf-/Gasgemisches enthält das Fördermittel in einem bevorzugten Ausführungsbeispiel der Erfindung einen Ringkanal, welcher koaxial zur bevorzugt hohlzylindrisch ausgebildeten Expansionskammer angeordnet ist und mit der Dampfleitung in Verbindung steht. Dabei steht der Ringkanal an einem stromaufwärtigen Ende mit der Dampfleitung und an einem stromabwärtigen Ende mit einem Mischkanal in Verbindung und die Düse mündet zentral in den Mischkanal. Durch diese Anordnung kann eine effiziente und gleichmäßige Vermischung des Druckgasstroms und des Dampfstroms erfolgen.

Ein kompakter Aufbau des Fördermittels kann gewährleistet werden, wenn die Expansionskammer, der Ringkanal und der Mischkanal in einem Reaktorblock aus Kunststoff angeordnet sind. Die Fertigung des Reaktorblocks aus Kunststoff gewährleistet dabei eine gute thermische Isolierung und ermöglicht eine manuelle Handhabung des Fördermittels, ohne die Gefahr, dass sich der Benutzer während des Aufschäumens Verbrennungen zuzieht. Weiterhin kann auch das ansteuerbare Schaltventil in dem Fördermittel integriert sein. Dies ermöglicht ebenfalls eine kompakte Bauweise. Das ansteuerbare Schaltventil kann jedoch auch in der Druckgasleitung angeordnet und vom Fördermittel separiert sein.

Die Expansionskammer und die Düse sind bevorzugt aus einem thermisch gut leitenden Material gefertigt, insbesondere aus Edelstahl. Dies stellt eine gute thermische Leitfähigkeit der Expansionskammer sicher und ermöglicht das Entfernen von Kondensflüssigkeit, die sich in der Expansionskammer festgesetzt hat. Die Expansionskammer ist zweckmäßig hohlzylindrisch bzw. rohrförmig ausgebildet und verläuft in dem Reaktorblock in axialer Richtung.

Zur Überführung des in dem Mischkanal erzeugten Dampf-/Gasgemischs in die aufzuschäumende Flüssigkeit ist bevorzugt das stromabwärtige Ende des Mischkanals mit einer Ablauflaufleitung verbunden.

In einem zweckmäßigen Ausführungsbeispiel der Erfindung ist die Ablaufleitung als Tauchrohr ausgebildet und weist ein offenes Ende auf, das in die Flüssigkeit eingetaucht werden kann, wobei sich die Flüssigkeit in einem Aufnahmebehälter, bspw. einer Tasse, befindet. Zweckmäßig ist die Ablaufleitung als flexibler Schlauch ausgebildet, wodurch das Eintauchen in die Flüssigkeit erleichtert wird.

Das in dem Fördermittel erzeugte Dampf-/Gasgemisch wird dabei über die Ablaufleitung in die Flüssigkeit geleitet, wodurch die Flüssigkeit erhitzt und aufgeschäumt wird. Die Konsistenz des dabei erzeugten Schaums, insbesondere das Verhältnis von Schaum zu Flüssigkeit, sowie weitere Parameter des Schaums wie z.B. seine Cremigkeit, Porosität, Schaumdichte und die Schaumstabilität (Drainage), sind dabei von den ausgewählten Parametern der Druckpulse des komprimierten Gases abhängig und können deshalb durch Auswählen geeigneter Parameter der Druckpulse beeinflusst werden. Ein Bediener kann daher durch Änderung der Parameter der Druckpulse vor und auch noch während des Aufschäumvorgangs die Eigenschaften des Schaums beeinflussen. So kann beispielsweise auch noch während des Aufschäumvorgangs die Wiederholrate (Pulsfrequenz) der periodisch in die Expanionskammer eingeleiteten Druckpulse verändert werden. Durch eine Änderung der Pulsfrequenz der Druckpulse wird insbesondere die Konsistenz des in der Flüssigkeit erzeugten Schaums beeinflusst. Auf diese Weise ist es beispielsweise möglich, die Konsistenz des erzeugten Schaums in vorgegebenen Grenzen zwischen fein und grob auszuwählen, indem über einen an der Vorrichtung vorgesehenen Drehregler die Pulsfrequenz stufenlos zwischen einem Minimalwert und einem Maximalwert eingestellt wird. Auf diese Weise wird es mit der erfindungsgemäßen Vorrichtung möglich, einen Schaum beliebiger Konsistenz zu erzeugen, wobei auch noch während des Aufschäumvorgangs (in gewissem Umfang) die erzeugte Schaumkonsistenz angepasst werden kann.

Die Wiederholrate (Pulsfrequenz) der zweckmäßig periodisch von dem Schaltventil erzeugten Druckpulse liegt zweckmäßig im Bereich von 0,1 bis 200 Hz und bevorzugt zwischen 1 und 50 Hz. Neben der Pulsfrequenz ist bevorzugt auch die Pulsdauer und/oder die Amplitude der Druckpulse einstellbar. Zum Einstellen einer gewünschten Pulsfrequenz, Pulsdauer und Pulsamplitude weist die Vorrichtung zweckmäßig eine geeignete Eingabeeinrichtung mit Tastschaltern oder Drehreglern auf, über welche die gewünschten Parameter der Druckpulse von einem Bediener eingegeben und von der Steuereinrichtung entsprechend eingestellt werden können. Insbesondere für die Einstellung der Pulsfrequenz ist zweckmäßig ein Drehregler vorgesehen, der bevorzugt stufenlos zwischen einer Minimalstellung und einer Maximalstellung einstellbar ist, um die Wiederholrate (Pulsfrequenz) der Druckpulse zwischen einem Minimalwert und einem Maximalwert (stufenlos) einstellen zu können. Ein Bediener kann mit diesem Drehregler bspw. zu Beginn des Aufschäumvorgangs eine gewünschte Konsistenz für den Schaum auswählen und über den Drehregler einstellen. Die vorgenommene Einstellung kann dabei zweckmäßig noch während des Aufschäumvorgangs geändert und insbesondere nachgeregelt werden, um eine an die individuellen Bedürfnisse angepasste Schaumqualität und -konsistenz zu erzeugen.

Um eine gewünschte Temperatur der Flüssigkeit beim Aufschäumen einzuhalten, umfasst die Vorrichtung zweckmäßig einen Temperatursensor zur Erfassung der Temperatur der Flüssigkeit bzw. des erzeugten Flüssigkeitsschaums. Der Temperatursensor ist dabei mit der Steuereinrichtung gekoppelt. Weiterhin ist zweckmäßig in der Dampfleitung ein Dampfventil vorgesehen, welches ebenfalls mit der Steuereinrichtung gekoppelt ist und von dieser geöffnet und geschlossen werden kann. Sobald der Temperatursensor eine vom Bediener vorgegebene Produkttemperatur (Temperatur der Flüssigkeit bzw. des Flüssigkeitsschaums) erfasst, wird das Dampfventil in der Dampfleitung geschlossen und gleichzeitig die Einleitung der Druckpulse in die Expansionskammer gestoppt. Hierfür wird das Schaltventil geschlossen und/oder der Kompressor der Druckgasquelle abgeschaltet.

Um zu verhindern, dass Dampf oder Flüssigkeit in die Druckgasquelle gelangt, ist zweckmäßig in dem Fördermittel zwischen dem Schaltventil und der Expansionskammer ein Rückschlagventil angeordnet, welches lediglich den Durchtritt von Druckgas (Druckpulsen) in die Expansionskammer zulässt, jedoch das Durchströmen von Druckgas und/oder Dampf in entgegengesetzter Richtung verhindert.

Zur Optimierung und Einstellung des zeitlichen Druckverlaufs des von der Expansionskammer durch die Düse in den Mischkanal geleiteten Druckgasstroms ist es zweckmäßig, wenn der Strömungsquerschnitt der Düse einstellbar ist. Die Düse kann hierfür bspw. als Drosselventil mit regelbarem Strömungsquerschnitt ausgebildet sein. Dadurch wird ein zusätzlicher Freiheitsgrad zur Beeinflussung der Eigenschaften der aufgeschäumten Flüssigkeit bereit gestellt.

Die erfindungsgemäße Vorrichtung weist den Vorteil auf, dass über das Schaltventil eine genaue, kontrollierbare und wiederholbare Einstellung des zeitlichen Druckverlaufs des Druckgases und des im Mischkanal durch Mischung mit dem Dampf erzeugten Dampf-Gasgemisches ermöglicht wird. Durch das Schaltventil kann sowohl die Menge als auch der Druck und dessen zeitlicher Verlauf des in den Mischkanal des Fördermittels eingeleiteten Druckgases (insbesondere Druckluft) genau eingestellt werden. Die stromaufwärts des Mischkanals angeordnete Expansionskammer dient dabei zur (exponentiellen) Dämpfung und Glättung des zeitlichen Druckverlaufs des in den Mischkanal eingeleiteten Druckgasstroms. Der zeitliche Druckverlauf des Druckgasstroms weist dabei einen konstanten Druck-Offset P1 auf, was den Vorteil hat, dass am Eingang des Mischkanals, in den die Düse mündet, immer ein Überdruck ansteht und sich kein Unterdruck ausbilden kann. Dadurch kann gewährleistet werden, dass der Druck des aus der Düse in den Mischkanal strömenden Druckgasstroms jederzeit höher als der Druck des ebenfalls in den Mischkanal einströmenden Dampfstroms ist und der Druckgasstrom daher entgegen dem Druck des Dampfstroms aus der Düse in den Mischkanal einströmen und sich dort mit dem Dampfstrom vermischen kann. Der Druck des Druckgasstroms unmittelbar vor der Düse kann dabei (bei einem konstanten, vorgegebenen Strömungsquerschnitt der Düse und vorgegebener Amplitude der vom Schaltventil erzeugten Druckstöße) über die Frequenz der vom Schaltventil erzeugten Druckstöße genau gesteuert und so eingestellt werden, dass der Druck des aus der Düse in den Mischkanal strömenden Druckgasstroms zu jeder Zeit höher als der Druck des in den Mischkanal einströmenden Dampfstroms ist.

Mit der erfindungsgemäßen Vorrichtung können unterschiedliche, aufschäumbare Flüssigkeiten, wie z.B. Kuhmilch, Kokosmilch, Sojamilch, Mandelmilch oder milchhaltige Getränke wie Kakaomilch, Milchkaffee, Eiskaffee, etc. aufgeschäumt werden, wobei die Zusammensetzung, die Porosität und Konsistenz des erzeugten Milchschaums genau und reproduzierbar eingestellt und an die Eigenschaften der zur Erzeugung von Schaum verwendeten Flüssigkeit angepasst werden können. Insbesondere kann ein glänzender, dichter Milchschaum erzeugt werden, wie er für die Herstellung von kreativen Gestaltungen der Milchschaumoberfläche von Espresso-Getränken mit graphischen Motiven (sog. "latte art") benötigt wird.

In einem weiteren Ausführungsbeispiel der Erfindung ist die Ablaufleitung des Fördermittels mit einem ersten Eingang einer Mischeinrichtung verbunden, welcher über einen zweiten Eingang die Flüssigkeit zugeführt wird. Die Flüssigkeit befindet sich dabei in einem Behälter, der über eine Flüssigkeitsleitung mit dem zweiten Eingang der Mischeinrichtung verbunden ist, so dass der Mischeinrichtung die Flüssigkeit zugeführt werden kann. In der Mischeinrichtung wird die Flüssigkeit mit den Druckpulsen des Dampf-/Druckgasgemischs vermischt, welche der Mischeinrichtung von dem Fördermittel über die Ablaufleitung zugeführt werden. Dadurch wird die Flüssigkeit in der Mischeinrichtung heiß aufgeschäumt. Die gedämpften Druckpulse des Dampf-/Druckgasgemischs stellen dabei eine homogene Vermischung der Flüssigkeit und des Dampf-/Druckgasgemischs sicher.

Bevorzugt ist bei dieser Ausführungsform der Behälter über eine Verzweigungsleitung mit der Druckgasleitung verbunden. Über die Verzweigungsleitung kann das von der Druckgasleitung bereitgestellte, unter Druck stehende Gas (bspw. Druckluft) in den Behälter geleitet werden, in dem die Flüssigkeit bevorratet ist. Bei Einleitung eines unter Druck stehenden Gases durch die Verzweigungsleitung in den Behälter entsteht in dem Behälter ein Überdruck, der die im Behälter befindliche Flüssigkeit durch die Flüssigkeitsleitung in die Mischeinrichtung fördert. Die Förderung der Flüssigkeit in die Mischeinrichtung erfolgt bei dieser Ausführungsform der erfindungsgemäßen Vorrichtung damit durch das Druckgas, welches von einer Druckgasquelle bereitgestellt und in die Druckgasleitung eingeleitet wird. Die Druckgasleitung ist hierfür im Betrieb der Vorrichtung mit einer Druckgasquelle verbunden, welche ein unter Druck stehendes Gas (Druckgas, insbesondere Druckluft) erzeugt.

Dadurch kann bei der erfindungsgemäßen Vorrichtung auf eine Pumpe zum Fördern der Flüssigkeit in die Mischeinrichtung verzichtet werden, wodurch die Herstellung der Vorrichtung kostengünstiger und die Vorrichtung im Betrieb weniger störungsanfällig und weniger wartungsintensiv wird.

In einer zweckmäßigen Ausgestaltung dieser Ausführungsform umfasst die Mischeinrichtung einen ersten Eingang und einen zweiten Eingang sowie einen Ausgang, wobei an den ersten Eingang die Druckgasleitung sowie die Dampfleitung und an den zweiten Eingang die Flüssigkeitsleitung angeschlossen ist. An den Ausgang ist zweckmäßig eine Ausgangsleitung angeschlossen, über welche die aufgeschäumte und/oder erhitzte Flüssigkeit abgeführt und z.B. in eine Tasse oder einen anderen Auffangbehälter überführt werden kann.

Die Mischeinrichtung umfasst bevorzugt einen Linearkanal, der zweckmäßig in der Mischeinrichtung vertikal stehend orientiert ist. Der erste Eingang der Mischeinrichtung, der über die Ablaufleitung mit dem Fördermittel zur Erzeugung und Überführung des Dampf-/ Druckgasgemischs in Verbindung steht, mündet dabei bevorzugt am unteren Ende in den Linearkanal, so dass die von dem Fördermittel erzeugten Druckpulse des Dampf-/Druckgasgemisches in der Mischeinrichtung in dem Linearkanal entgegen der Schwerkraft von unten nach oben strömt. Dies ermöglicht eine homogene Durchmischung der Flüssigkeit mit dem Dampf-/Druckgasgemisch.

Im Bereich des zweiten Eingangs der Mischeinrichtung, der über die Flüssigkeitsleitung mit dem Behälter und der sich darin befindlichen Flüssigkeit in Verbindung steht, ist zweckmäßig eine Düse angeordnet, mit der die durch die Flüssigkeitsleitung zugeführte Flüssigkeit in die Mischeinrichtung gesprüht wird. Das Einsprühen der Flüssigkeit in die Mischeinrichtung trägt ebenfalls zu einer guten und homogenen Vermischung der Flüssigkeit mit dem Dampf-/ Druckgasgemisch bei.

In oder an der Druckgasleitung ist bei dieser Ausführungsform zweckmäßig ein einstellbarer Druckminderer, beispielsweise in Form eines einstellbaren Druckbegrenzungsventils, angeordnet. Durch den einstellbaren Druckminderer kann der Druck des Druckgases in der Druckgasleitung auf einen gewünschten und konstanten (Maximal-)Wert eingestellt werden. Die an die Druckgasleitung angeschlossene Druckgasquelle kann dabei so betrieben werden, dass sie permanent ein Druckgas mit gleichbleibendem Druck erzeugt.

Diese und weitere Merkmale und Vorteile der Erfindung ergeben sich aus den nachfolgend unter Bezugnahme auf die begleitenden Zeichnungen näher beschriebenen Ausführungsbeispielen. Die Zeichnungen zeigen:
- **Fig. 1**: schematische Darstellung einer ersten Ausführungsform einer Vorrichtung gemäß der Erfindung mit einem Fördermittel zur Erzeugung und Überführung eines Dampf-/Gasgemischs in eine aufzuschäumende Flüssigkeit, wobei sich die Flüssigkeit in einem offenen Aufnahmebehälter befindet,
- **Fig. 2**: Detaildarstellung des Fördermittels der Vorrichtung von Figur 1 in einer Schnittzeichnung,
- **Fig. 3**: zeitlicher Verlauf des Drucks des im Fördermittel erzeugten Druckgasstroms zur Erzeugung des Dampf-/Gasgemischs;
- **Fig. 4**: schematische Darstellung einer zweiten Ausführungsform einer Vorrichtung gemäß der Erfindung mit einem Fördermittel zur Erzeugung und Überführung eines Dampf-/Gasgemischs in eine Mischeinrichtung, der die aufzuschäumende Flüssigkeit, zugeführt wird.

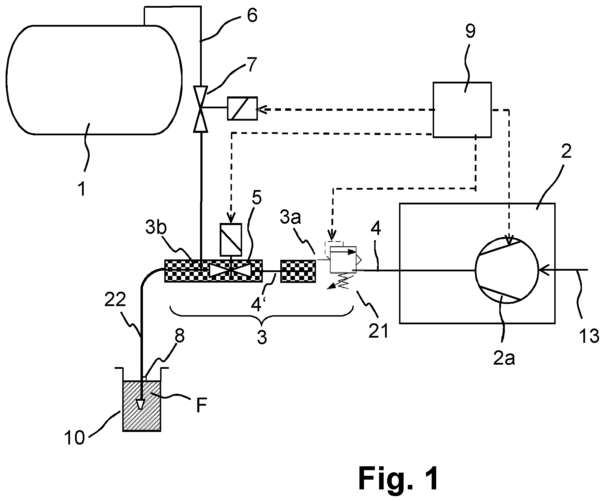

Die in Fig. 1 schematisch dargestellte Ausführungsform einer erfindungsgemäßen Vorrichtung umfasst einen Dampferzeuger 1, eine von diesem ausgehende Dampfleitung 6, eine Druckgasquelle 2 mit einem Kompressor 2a, eine von der Druckgasquelle ausgehende Druckgasleitung 4 sowie ein Fördermittel 3 zur Überführung eines Dampf-/Gas-Gemischs in eine aufzuschäumende Flüssigkeit 11. Bei der Flüssigkeit 11, die sich hier in einem oben offenen Behälter 10 (bspw. in einem pitcher) befindet, kann es sich insbesondere um ein Getränk wie Milch oder ein milchhaltiges Getränk handeln. Das Fördermittel enthält am stromabwärtigen Ende eine Ablaufleitung 22, bspw. in Form eines Tauchrohrs oder eines flexiblen Schlauchs, deren offenes Ende zum Aufschäumen in die Flüssigkeit eingetaucht werden kann. Über die Dampfleitung 6 wird dem Fördermittel 3 in dem Dampferzeuger 1 erzeugter Dampf zugeführt und über die Druckgasleitung 4 wird ein in der Druckgasquelle 2 komprimiertes Gas in das Fördermittel 3 eingeleitet. Bei dem Gas handelt es sich zweckmäßig um Luft, es kann sich jedoch auch um andere Gase wie Kohlendioxid (CO₂) oder Stickstoff (N₂) oder um Gasgemische handeln. Vorzugsweise wird von dem Kompressor 2a über eine Gaszufuhrleitung 13 Luft aus der Umgebung angesaugt.

Im Fördermittel 3 wird der Gasstrom des komprimierten Gases mit dem Dampfstrom vermischt, um ein Dampf-/Gasgemisch zu erzeugen, welches über die Ablaufleitung 22 in die Flüssigkeit F eingeleitet wird.

An dem in die Flüssigkeit eingetauchten offenen Ende der Ablaufleitung 22 ist ein Temperatursensor 8 angebracht, welcher die Temperatur der Flüssigkeit F erfasst und über eine Messleitung an eine Steuereinrichtung 9 überträgt. In der Dampfleitung 6 ist zwischen dem Dampferzeuger 1 und dem Fördermittel 3 ein elektrisch steuerbares Dampfventil 7 angeordnet, welches bspw. als Magnetventil ausgebildet sein kann. Das Dampfventil 7 und der Kompressor 2a der Druckgasquelle 2 werden von der elektronischen Steuereinrichtung 9, mit der sie über entsprechende Steuerleitungen verbunden sind, gesteuert. Die Steuereinrichtung 9 enthält eine Mensch-Maschine-Schnittstelle in Form von Tasten, Drehknöpfen und eines Bildschirms, der auch berührungsempfindlich sein kann, zur Kommunikation mit einem Benutzer. Der Benutzer kann über die Schnittstelle Steueranweisungen eingeben und angezeigte Betriebszustände und Fehlermeldungen auslesen.

Das Fördermittel 3 enthält einen ersten Teil 3a und eine zweiten Teil 3b, die miteinander über eine Druckgasleitung 4` in Verbindung stehen. Im ersten Teil 3a des Fördermittels 3 ist ein Druckminderer 21 vorgesehen. Bei dem Druckminderer 21 kann es sich insbesondere um ein manuell oder über die Steuereinrichtung 9 einstellbares Druckbegrenzungsventil handeln. Im zweiten Teil 3b des Fördermittels 3 ist ein Schaltventil 5 angeordnet, welches zum Öffnen und Schließen über die Steuereinrichtung 9 angesteuert werden kann. Bei dem Schaltventil 5 kann es sich insbesondere um ein Magnetventil handeln, welches zweckmäßig von der Steuereinrichtung 9 pulsweitenmoduliert ansteuerbar ist.

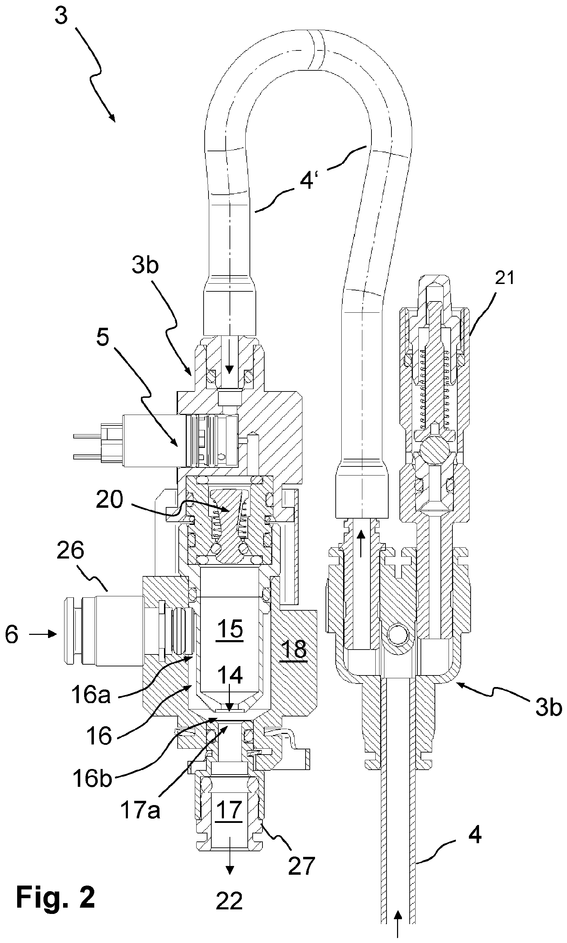

Das Fördermittel 3 ist in Figur 2 in einer Schnittzeichnung im Detail dargestellt. Wie aus Figur 2 ersichtlich, enthält der erste Teil 3a des Fördermittels 3 den einstellbaren Druckminderer 21. Der Druck des von der Druckgasquelle 2 bereitgestellten und über die Druckgasleitung 4 zugeführten Druckgasstroms kann über den Druckminderer 21 auf einen vorgebbaren Wert von bspw. 2 bar eingestellt werden und wird vom Druckminderer 21 konstant aufrechterhalten. Dadurch können Druckschwankungen des Kompressors 2a der Druckgasquelle 2 ausgeglichen werden. Der im ersten Teil 3a des Fördermittels 3 auf einem konstanten Druck gebrachte Druckgasstrom wird über die Druckgasleitung 4` in den zweiten Teil 3b des Fördermittels 3 geleitet. Am stromaufwärtigen Eingang des zweiten Teils 3b des Fördermittels 3 ist das Schaltventil 5 angeordnet, durch das der Druckgasstrom durchgeführt wird. Das Schaltventil wird von der Steuereinrichtung periodisch geöffnet und geschlossen, wobei sowohl die Frequenz als auch die Zeitdauer des Öffnens und Schließens von der Steuereinrichtung gesteuert wird, entsprechend der vom Benutzer über die Schnittstelle eingestellten Steueranweisungen.

Das Fördermittel umfasst eine stromabwärts des Schaltventils 5 angeordnete und hohlzylindrisch ausgebildete Expansionskammer 15 mit einer am stromabwärtigen Ende der Expansionskammer 15 angeordneten Düse 14. Die Düse mündet zentral in einen sich stromabwärtig anschließenden Mischkanal 17. Zwischen dem Schaltventil 5 und der Expansionskammer 15 ist ein Rückschlagventil 20 angeordnet. Die Expansionskammer 15 weist dabei einen (wesentlich) größeren Durchmesser auf als die Druckgasleitungen 4 und 4` und die Düse 14.

Weiterhin enthält das Fördermittel 3 einen die Expansionskammer 15 koaxial umgebenden Ringkanal 16, der an seinem stromaufwärtigen Ende 16a mit der an einem Flansch 26 angeordneten Dampfleitung 6 in Verbindung steht. An seinem stromabwärtigen Ende 16b mündet der Ringkanal 16 in den Mischkanal 17. An dem stromabwärtigen Ende des Mischkanals 17 ist über einen Flansch 27 die Ablaufleitung 22 angeordnet.

Bevorzugt sind die Expansionskammer 15 und die Düse 14 aus einem thermisch gut leitenden Material, insbesondere aus Edelstahl, gefertigt und in einem thermisch isolierenden Reaktorblock 18 angeordnet. Der Reaktorblock 18 ist bspw. aus einem hochtemperaturbeständigen Kunststoff, wie PEEK, gefertigt. In dem Reaktorblock 18 sind der Ringkanal 16 und die Mischkammer 17 ausgeformt.

Zum Betrieb der erfindungsgemäßen Vorrichtung wird nach Inbetriebnahme des Dampferzeugers 1 das Dampfventil 7 von der Steuereinrichtung 9 in die offene Stellung versetzt und gleichzeitig die Druckgasquelle 2 aktiviert. Der von Druckgasquelle 2 erzeugte Druckgasstrom gelangt durch die Druckgasleitung 4 in den ersten Teil 3a des Fördermittels, wo über den Druckminderer 21 ein konstanter Druck eingestellt wird. Der auf konstantem Druck gehaltene Druckgasstrom wird über die Druckgasleitung 4' durch das Schaltventil 5 des zweiten Teils 3a des Fördermittels 3 geleitet. Das Schaltventil 5 wird von der Steuereinrichtung 9 periodisch mit einer einstellbaren Frequenz geöffnet und geschlossen, wodurch aus dem permanenten Druckgasstrom Druckpulse erzeugt und durch das (in dieser Richtung offene) Rückschlagventil 20 in die Expansionskammer 15 geleitet werden. In der Expansionskammer können die eingeleiteten Druckpulse expandieren und werden durch die stromabwärtige Düse 14 in den Mischkanal 17 ausgestoßen.

Der von dem Dampferzeuger 1 erzeugte Dampfstrom gelangt gleichzeitig durch die Dampfleitung 6 in den Ringkanal 16 im zweiten Teil 3b des Fördermittels. Am stromabwärtigen Ende 16b des Ringkanals 16 strömt der Dampf in den Mischkanal 17 und vermischt sich dort mit dem Druckgasstrom, der durch die Düse 14 in den Mischkanal 17 einströmt. Das dadurch im Mischkanal 17 gebildete Dampf-/Gasgemisch strömt schließlich durch die Ablaufleitung 22 in die Flüssigkeit, wodurch diese erhitzt und aufgeschäumt wird (Figur 1).

Das Messsignal des Temperatursensors 8 dient als Kriterium für die Beendigung des Aufschäumvorgangs. Durch die Zufuhr von Dampf erwärmt sich die Flüssigkeit. Daher wird bei Erreichen einer vorbestimmten Temperaturschwelle der Aufschäumvorgang beendet. Im Fall von Milch als Flüssigkeit F ist dies deshalb zweckmäßig, weil ab einer bestimmten Temperatur wegen einer Gerinnung der Milcheiweiße keine weitere Schaumbildung mehr erfolgt. In diesem Fall werden durch die Steuereinrichtung 9 sowohl das Schaltventil 5 als auch das Dampfventil 7 gleichzeitig geschlossen, sobald von dem Temperatursensor 8 die vorgegebene Temperaturschwelle erfasst wird.

Die Expansionskammer 15 und die Düse 14 wirken als Dämpfungsglied ("snubber"), welches auf die vom Schaltventil 5 erzeugten Druckpulse eine dämpfende Wirkung ausübt. Dadurch ergibt sich ein gedämpfter zeitlicher Druckverlauf p(t) des durch die Düse 14 aus der Expansionskammer 15 strömenden Druckgasstroms mit gedämpften, sich periodisch wiederholenden Druckspitzen p0.

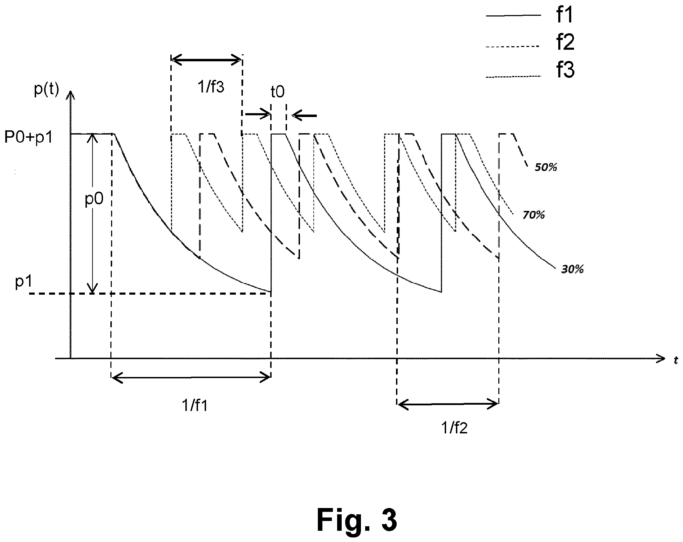

Der sich daraus ergebende zeitliche Druckverlauf p(t) des in den Mischkanal 17 strömenden Druckgasstroms ist schematisch in Figur 3 für drei verschiedene Frequenzen f1, f2 und f3 gezeigt. Der zeitliche Druckverlauf p(t) weist, wie aus Figur 3 ersichtlich, sich periodisch wiederholende und plateauförmig abgeflachte Druckspitzen (p0) auf, wobei jede Druckspitze (p0) bis zur zeitlich nachfolgenden Druckspitze einen durch die dämpfende Wirkung des Dämpfungsglieds (15, 14) exponentiell abfallenden Druckverlauf hat, der über die Relation p(t) = p0 e ^{-t/τ} beschrieben werden kann, wobei die Zeitkonstante τ vom Volumen der Expansionskammer 15 und dem Strömungsquerschnitt der Düse 14 abhängt. Die (maximale) Amplitude der (plateauförmig abgeflachten) Druckspitzen (p0) ist von dem konstanten Druck des Druckgasstroms abhängig, der im ersten Teil 3a des Fördermittels 3 eingestellt und auf einem vorgegebenen konstanten Niveau gehalten wird.

Jede Druckspitze weist über eine vorgegebene Zeitspanne t0 ein konstantes, maximales Druckniveau (p0) auf, wobei die Zeitspanne t0 durch die von der Steuereinrichtung 9 gesteuerten Öffnungszeiten (also die Pulsdauer der Druckpulse) des Schaltventils 5 bestimmt wird. Um eine Beeinflussung des nachfolgenden exponentiellen Abfalls des Drucks zu vermeiden, sollte die Zeitspanne t0 möglichst kurz gewählt werden.

Je nach gewählter Frequenz f und in Abhängigkeit des Dämpfungsgrads des aus der Expansionskammer 15 und der Düse 14 gebildeten Dämpfungsglieds ergeben sich dabei unterschiedliche, über die Zeit gemittelte mittlere Druckwerte des Druckgasstroms, wie in dem Diagramm der Figur 3 für die verschiedenen Frequenzen f1, f2 und f3 gezeigt. In dem Diagramm der Figur 3 sind für die Frequenzen f1, f2 und f3 jeweils die zeitlich gemittelten mittleren Druckwerte als prozentualer Anteil des maximalen Drucks angegeben, wobei der maximale Druck (=100%) dem konstanten Druck des Druckgasstroms entspricht, der vom Druckminderer 21 bereitgestellt wird und in den zweiten Teil 3b des Fördermittels einströmt.

Wie aus Figur 3 ersichtlich, hat der durch die Düse 14 aus der Expansionskammer 15 ausströmende Gasstrom einen zeitlichen Druckverlauf p(t) mit einem konstanten Druck-Offset (p1). Der zeitliche Druckverlauf p(t) des Gasstroms setzt sich also aus dem konstanten Druck-Offset p1 und den gedämpften Druckspitzen p0(t) zusammen: p(t) = p1 + p0(t). Der zeitlich konstante Druck-Offset p1 wird dabei zweckmäßig so gewählt, dass der Druck p(t) des Druckgasstroms zu jeder Zeit höher ist als der Druck des über den Ringkanal 16 in den Mischkanal 17 eingeleiteten Dampfstroms.

Das Rückschlagventil 20 verhindert im Fall eines Druckabfalls in der Expansionskammer 15 den Eintritt von Dampf aus der Dampfleitung 6 oder von Flüssigkeit F aus dem Behälter 10 in das Schaltventil 5. Die Düse 14 kann im einfachsten Fall einen festen Strömungsquerschnitt haben. Es kann jedoch auch vorgesehen sein, dass der Strömungsquerschnitt der Düse 14 regelbar ist, wofür die Düse 14 bspw. als regelbares Drosselventil ausgebildet sein kann.

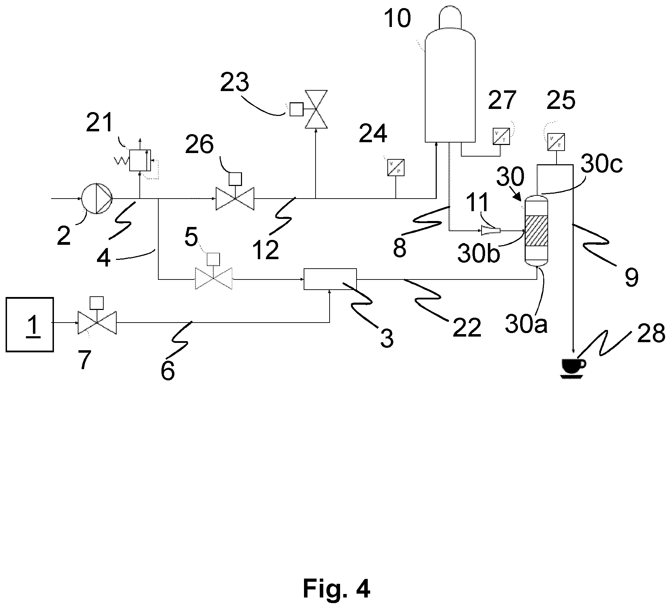

In Figur 4 ist eine zweite Ausführungsform einer erfindungsgemäßen Vorrichtung zum Erhitzen und/oder Aufschäumen einer Flüssigkeit gezeigt. Mit dieser Vorrichtung kann eine Flüssigkeit, wie beispielsweise Milch, in einer Mischeinrichtung gleichzeitig erhitzt und aufgeschäumt werden.

Die in Figur 4 gezeigte Vorrichtung umfasst einen Behälter 10 zur Aufnahme der zu erhitzenden und aufzuschäumenden Flüssigkeit, eine an einen Dampferzeuger 1 angeschlossene Dampfleitung 6, eine an eine Druckgasquelle 2 angeschlossene Druckgasleitung 4 und eine mit der Dampfleitung 6, der Druckgasleitung 4 und dem Behälter 10 in Verbindung stehende Mischeinrichtung 30. Bei der Druckgasquelle 2 kann es sich beispielsweise um einen Kompressor handeln, der Umgebungsluft ansaugt und verdichtet. Der Dampferzeuger 1 kann einen Heißwasserboiler enthalten, der Wasser auf Temperaturen oberhalb des Siedepunkts erhitzt. In der Dampfleitung 6 ist zum Öffnen und Schließen der Dampfleitung 6 ein Dampfventil 7 angeordnet.

Die im Wesentlichen zylindrische Mischeinrichtung 30 enthält einen ersten Eingang 30a, der am unteren Ende der Mischeinrichtung 30 angeordnet ist, sowie einen zweiten Eingang 30b, der seitlich etwa in der Mitte der Mischeinrichtung 30 angeordnet ist. Weiterhin weist die Mischeinrichtung 30 an ihrem oberen Ende einen Ausgang 30c auf, an den eine Ausgangsleitung 9 angeschlossen ist. Die in Figur 4 gezeigte Ausführungsform einer erfindungsgemäßen Vorrichtung enthält weiterhin ein Fördermittel 3 zur Erzeugung eines Dampf-/Druckgemischs. Das Fördermittel 3 ist wie in Figur 2 dargestellt ausgebildet und mit der Druckgasleitung 4 sowie mit der Dampfleitung 6 verbunden. Weiterhin ist ein Ausgang des Fördermittels 3 über eine Ablaufleitung 22 mit dem ersten Eingang 30a der Mischeinrichtung 30 verbunden. Der Aufbau und die Funktion des Fördermittels 3 zur Erzeugung eines Dampf-/ Druckgemischs entspricht der Ausführungsform der Erfindung gemäß den Figuren 1 bis 3.

Der zweite Eingang 30b der Mischeinrichtung 30 steht über eine Flüssigkeitsleitung 8 mit dem Behälter 10 in Verbindung. Bevorzugt mündet ein Ende der Flüssigkeitsleitung 8 dabei in eine Öffnung im Boden des Behälters 10, wie in Figur 4 gezeigt. Am anderen Ende der Flüssigkeitsleitung 8 ist eine Düse 11 angeordnet, welche in den zweiten Eingang 30b der Mischeinrichtung 30 mündet. Die Düse 11 ist in Figur 4 aus Gründen der besseren Darstellung außerhalb der Mischeinrichtung 30 gezeigt, befindet sich jedoch tatsächlich im Bereich des zweiten Eingangs 30b der Mischeinrichtung 30.

Die Mischeinrichtung 30 ist bevorzugt so ausgebildet wie die in der WO 2017/063936A1 beschriebene Erhitzereinheit. Die WO 2017/063936A1 wird insoweit in Bezug genommen. Die Mischeinrichtung 30 umfasst dabei insbesondere einen längs der zylindrischen Mischeinrichtung 30 verlaufenden und vertikal stehenden Linearkanal, der sich vom ersten Eingang 30a der Mischeinrichtung 30 bis zu deren Ausgang 30c erstreckt, wobei das Dampf-/Druckgasgemisch in dem Linearkanal entgegen der Schwerkraft nach oben strömt.

Von der Druckgasleitung 4, die von der Druckgasquelle 2 bis zu einem Eingang des Fördermittels 3 verläuft, zweigt eine Verzweigungsleitung 12 ab, welche mit dem Behälter 10 in Verbindung steht. Zweckmäßig mündet auch die Verzweigungsleitung 12 in den Boden des Behälters 10, wie aus Figur 4 ersichtlich.

In der Verzweigungsleitung 12 ist ein schaltbares Sperrventil 26 angeordnet, mit dem die Verzweigungsleitung 12 geöffnet und geschlossen werden kann. Weiterhin ist in der Verzweigungsleitung 12 ein Druckablassventil 23 sowie ein Drucksensor 24 vorgesehen.

In der Druckgasleitung 4 ist ein einstellbarer Druckminderer 21 angeordnet. Bei dem Druckminderer 21 kann es sich beispielsweise um ein einstellbares Druckbegrenzungsventil handeln. Weiterhin ist in der Druckgasleitung 4 stromaufwärts des Fördermittels 3 ein Schaltventil 5 angeordnet, welches zweckmäßig als Magnetventil ausgebildet und in dem Ausführungsbeispiel der Figur 4 vom Fördermittel 3 separiert ist.

Zur Erfassung der Temperatur der Flüssigkeit in dem Behälter 10 ist dieser mit einem Temperatursensor 27 gekoppelt. Zur Erfassung der Temperatur der erhitzten und aufgeschäumten Flüssigkeit ist ein weiterer Temperatursensor 25 mit der Ausgangsleitung 9 gekoppelt.

Zum Erhitzen und gleichzeitigen Aufschäumen der Flüssigkeit erzeugt die Druckgasquelle 2 ein unter Druck stehendes Gas, insbesondere Druckluft, mit einem konstanten Druck. Der Druck des von der Druckgasquelle 2 bereitgestellten Druckgases wird mit dem Druckminderer 21 auf einen gewünschten Wert reguliert und in die Druckgasleitung 4 eingeleitet. Das in der Druckgasleitung 4 angeordnete oder in der Fördermittel 3 integrierte Schaltventil 5 wird bevorzugt periodisch geöffnet und geschlossen, so dass der Expansionskammer 15 des Fördermittels 3 periodische Druckpulse des Druckgases zugeführt werden. Gleichzeitig wird dem Fördermittel 3 über die Dampfleitung 6 bei geöffnetem Dampfventil 7 heißer Dampf zugeführt, der vom Dampferzeuger 1 bereitgestellt wird. Die Druckpulse des Druckgases und der heiße Dampf werden in dem Fördermittel 3 zur Erzeugung eines Dampf-/Druckgemischs miteinander vermischt, wie oben anhand der Figur 2 erläutert. Das auf diese Weise im Mischkanal 17 des Fördermittels 3 gebildete, gepulste Dampf-/Druckgasgemisch wird durch die Ablaufleitung 22 abgeführt und zum ersten Eingang 30a der Mischeinrichtung 30 geleitet.

Gleichzeitig wird der Mischeinrichtung 30 über den zweiten Eingang 30b und die daran angeschlossene Flüssigkeitsleitung 8 (kalte) Flüssigkeit aus dem Behälter 10 zugeführt. Um einen Zufuhrdruck bereitzustellen, welcher ausreichend ist, um die Flüssigkeit aus dem Behälter 10 durch die Flüssigkeitsleitung 8 und durch die Düse 11 in die Mischeinrichtung 30 zu überführen, wird bei geöffnetem Sperrventil 26 und geschlossenem Ablassventil 23 Druckgas über die Verzweigungsleitung 12 in den Behälter 10 eingeleitet. Dadurch entsteht im Behälter 10 ein Überdruck, der die Flüssigkeit über die Flüssigkeitsleitung 8 und durch die Düse 11 in den zweiten Eingang 30b der Mischeinrichtung 30 fördert.

Das am ersten Eingang 30a in die Mischeinrichtung 30 eingeleitete Dampf-/ Druckgasgemisch und die am zweiten Eingang 30b eingeleitete Flüssigkeit wird in der Mischeinrichtung 30 vermischt, wobei sich die Flüssigkeit durch den heißen Dampf des Dampf-/Druckgemisches erhitzt und gleichzeitig durch die (gedämpften) Druckpulse des Druckgases aufgeschäumt wird. Der erhitzte Flüssigkeitsschaum wird über die Ausgangsleitung 9 abgeführt und kann in einen an der Mündung der Ausgangsleitung 9 angeordneten, oben offenen Auffangbehälter 28, beispielsweise eine Tasse, eingeleitet werden.

Die ansteuerbaren Ventile, also das Dampfventil 7, das Schaltventil 5, das Sperrventil 22 und das Druckablassventil 23, sowie der einstellbare Druckminderer 21 und die Leistung des Dampferzeugers 1 werden dabei von einer zentralen Steuereinrichtung gesteuert. Die Ansteuerung der Ventile sowie des Druckminderers 21 erfolgt dabei in Abhängigkeit des vom Drucksensor 24 erfassten Drucks in der Verzweigungsleitung 12. Das Messsignal des Temperatursensors 27 dient zur Überwachung der Temperatur der erhitzten und aufgeschäumten Flüssigkeit. Wenn die vom Temperatursensor 27 erfasste Temperatur von einer eingestellten Solltemperatur abweicht, kann die Temperatur der erhitzten und aufgeschäumten Flüssigkeit nachjustiert werden, indem entweder der vom Drucksensor 24 erfasste Druck in der Verzweigungsleitung 21 (über den Druckminderer 21) und dadurch die pro Zeiteinheit zugeführte Menge an kalter Flüssigkeit und/oder der vom Dampferzeuger 1 bereitgestellte Dampfdruck und dadurch die zum Erwärmen der Flüssigkeit eingesetzte Heizleistung von der Steuereinrichtung angepasst wird.

## Patentansprüche

1. Vorrichtung zum Erhitzen und Aufschäumen einer Flüssigkeit, insbesondere eines Getränks, umfassend eine mit einem Dampferzeuger (1) verbindbare Dampfleitung (6), eine mit einer Druckgasquelle (2) verbindbare Druckgasleitung (4) und ein mit der Dampfleitung (6) und der Druckgasleitung (4) in Verbindung stehendes Fördermittel (3) zur Erzeugung und Überführung eines Dampf-/Gasgemischs in die Flüssigkeit, sowie ein steuerbares Schaltventil (5), wobei dem Fördermittel (3) über die Dampfleitung (6) heißer Dampf sowie über die Druckgasleitung (4) ein unter einem vorgegebenen konstanten Druck stehender Druckgasstrom zugeleitet und mittels des Schaltventils (5) Druckpulse (p) aus dem Druckgasstrom erzeugt werden, **dadurch gekennzeichnet, dass** das Fördermittel (3) eine zur Dämpfung der eingeleiteten Druckpulse (p) dienende Expansionskammer (15) mit einer am stromabwärtigen Ende der Expansionskammer (15) angeordneten Düse (14) umfasst.

2. Vorrichtung nach Anspruch 1, **dadurch gekennzeichnet, dass** das Schaltventil (5) mit einer vorgegebenen Frequenz (f) ansteuerbar ist und durch periodisches Öffnen und Schließen mit der vorgegebenen Frequenz (f) Druckpulse (p) aus dem Druckgasstrom erzeugt und in die Expansionskammer (15) leitet, wobei bevorzugt die Pulsfrequenz (f) und/oder die Pulsdauer (t0) und/oder die Amplitude (p0) der vom Schaltventil erzeugten Druckpulse einstellbar ist.

3. Vorrichtung nach Anspruch 1 oder 2 , **dadurch gekennzeichnet, dass** das Fördermittel (3) einen Ringkanal (16) umfasst, welcher koaxial zur zylindrisch ausgebildeten Expansionskammer (15) angeordnet ist und mit der Dampfleitung (6) in Verbindung steht.

4. Vorrichtung nach Anspruch 2, wobei der Ringkanal (16) an einem stromaufwärtigen Ende (16a) mit der Dampfleitung (6) und an einem stromabwärtigen Ende (16b) mit einem Mischkanal (17) in Verbindung steht und das stromabwärtige Ende des Mischkanals (17) mit einer Ablauflaufleitung (22) verbunden ist und die Düse (14) an einem stromaufwärtigen Ende (17a) des Mischkanals (17) in den Mischkanal (17) mündet.

5. Vorrichtung nach einem der voranstehenden Ansprüche, **dadurch gekennzeichnet, dass** die Expansionskammer (15) und die Düse (14) aus einem thermisch leitenden Material, insbesondere aus Edelstahl, gefertigt sind.

6. Vorrichtung nach einem der Ansprüche 3 bis 5, **dadurch gekennzeichnet, dass** die Expansionskammer (15) mit der Düse (14) sowie der Ringkanal (16) und der Mischkanal (17) in einem Reaktorblock (18) angeordnet sind, wobei der Reaktorblock (18) zumindest teilweise aus Kunststoff, insbesondere aus PEEK gefertigt ist, wobei die Expansionskammer (15) insbesondere hohlzylindrisch ausgebildet ist und in axialer Richtung in dem Reaktorblock (18) verläuft.

7. Vorrichtung nach einem der voranstehenden Ansprüche, **dadurch gekennzeichnet, dass** der Durchmesser der hohlzylindrisch ausgebildeten Expansionskammer (15) größer ist als der Querschnitt der Druckgasleitung (4) und/oder dass der Strömungsquerschnitt der Düse (14) kleiner ist als der Durchmesser der Expansionskammer (15), bevorzugt um wenigstens einen Faktor 2.

8. Vorrichtung nach einem der voranstehenden Ansprüche, **dadurch gekennzeichnet, dass** die durch ein periodisches Öffnen und Schließen des Schaltventils (5) erzeugten Druckpulse (p) in der Expansionskammer (15) expandieren und dadurch gedämpft werden, wobei die Expansionskammer (15) und die Düse (14) als Dämpfungsglied für die in die Expansionskammer (15) eingeleiteten Druckpulse (p) wirken.

9. Vorrichtung nach einem der voranstehenden Ansprüche, **dadurch gekennzeichnet, dass** das durch die Düse (14) aus der Expansionskammer (15) strömende Dampf-/Gasgemisch einen zeitlichen Druckverlauf p(t) mit gedämpften, sich periodisch wiederholenden Druckspitzen (p0), insbesondere mit plateauförmig abgeflachten Druckspitzen (p0), aufweist, wobei jede Druckspitze (p0) bis zur zeitlich nachfolgenden Druckspitze insbesondere einen exponentiell abfallenden Druckverlauf aufweist.

10. Vorrichtung nach einem der voranstehenden Ansprüche, **dadurch gekennzeichnet, dass** die Vorrichtung einen Behälter (10) zur Aufnahme der Flüssigkeit sowie eine mit der Dampfleitung (6), der Druckgasleitung (4) und dem Behälter (10) in Verbindung stehende Mischeinrichtung (30) umfasst, wobei der Mischeinrichtung (30) die Flüssigkeit und die vom Fördermittel (3) erzeugten Pulse eines Dampf-/Druckgasgemisches zugeführt und in der Mischeinrichtung (30) zum heißen Aufschäumen der Flüssigkeit vermischt werden.

11. Vorrichtung nach Anspruch 10, **dadurch gekennzeichnet, dass** der Behälter (10) über eine Verzweigungsleitung (12) mit der Druckgasleitung (4) in Verbindung steht, wobei die im Behälter (10) bevorratete Flüssigkeit durch von der Druckgasquelle (2) bereitgestellten Überdruck in die Mischeinrichtung (30) gefördert wird.

12. Vorrichtung nach Anspruch 10, **dadurch gekennzeichnet, dass** die Mischeinrichtung (30) einen ersten Eingang (30a) zur Zuführung der vom Fördermittel (3) erzeugten Pulse des Dampf-/Druckgasgemisches, einen zweiten Eingang (30b) zur Zuführung der Flüssigkeit sowie einen Ausgang (30c) zur Abführung der erhitzten und aufgeschäumten Flüssigkeit umfasst, wobei die Mischeinrichtung (30) über eine Flüssigkeitsleitung (8) mit dem Behälter (10) in Verbindung steht.

13. Verfahren zum Aufschäumen einer Flüssigkeit, insbesondere eines Getränks, mit Pulsen eines Dampf-/Druckgasgemisches, wobei zur Erzeugung von Pulsen des Dampf-/Druckgasgemisches einem Fördermittel (3) über eine Dampfleitung (6) heißer Dampf und über eine Druckgasleitung (4) ein unter einem vorgegebenen konstanten Druck stehender Druckgasstrom zugeleitet und mittels eines Schaltventils (5) Druckpulse (p) aus dem Druckgasstrom erzeugt werden, **dadurch gekennzeichnet, dass** die Druckpulse (p) des Druckgasstroms in dem Fördermittel (3) durch das Zusammenwirken einer Expansionskammer (15) und einer an einem stromabwärtigen Ende der Expansionskammer (15) angeordneten Düse (14) gedämpft werden.

14. Verfahren nach Anspruch 13, wobei die Flüssigkeit in einem Mischbehälter (11) bevorratet und das Dampf-/Druckgasgemisch über ein Tauchrohr (22) in die Flüssigkeit eingeleitet wird.

15. Verfahren nach Anspruch 13, **dadurch gekennzeichnet, dass** die Flüssigkeit in einem Behälter (10) bevorratet und vom Behälter (10) zu einer Mischeinrichtung (30) geführt wird, in der die Flüssigkeit mit dem Dampf-/Druckgasgemisch vermischt wird, wobei die im Behälter (10) bevorratete Flüssigkeit bevorzugt durch von der Druckgasleitung (4) bereitgestellten Überdruck in die Mischeinrichtung (30) gefördert wird.

## Claims

1. Apparatus for heating and foaming a liquid, in particular a beverage, comprising a steam line (6) which can be connected to a steam generator (1), a compressed gas line (4) which can be connected to a compressed gas source (2), and a conveying means (3) which is connected to the steam line (6) and the compressed gas line (4) for generating and transferring a steam/gas mixture into the liquid, and a controllable switching valve (5), wherein hot steam is fed to the conveying means (3) via the steam line (6) and a compressed gas flow under a predetermined constant pressure is fed to the conveying means (3) via the compressed gas line (4) and pressure pulses (p) are generated from the compressed gas flow by means of the switching valve (5), **characterised in that** the conveying means (3) comprises an expansion chamber (15) serving to damp the introduced pressure pulses (p) and having a nozzle (14) arranged at the downstream end of the expansion chamber (15).

2. Apparatus according to claim 1, **characterised in that** the switching valve (5) is controllable with a predetermined frequency (f) and generates pressure pulses (p) from the pressurised gas flow by periodically opening and closing with the predetermined frequency (f) and conducts them into the expansion chamber (15), wherein preferably the pulse frequency (f) and/or the pulse duration (t0) and/or the amplitude (p0) of the pressure pulses generated by the switching valve is adjustable.

3. Apparatus according to claim 1 or 2, **characterised in that** the conveying means (3) comprises an annular channel (16) which is arranged coaxially with the cylindrically formed expansion chamber (15) and communicates with the steam line (6).

4. Apparatus according to claim 2, wherein the annular channel (16) communicates at an upstream end (16a) with the steam line (6) and at a downstream end (16b) with a mixing channel (17), and the downstream end of the mixing channel (17) is connected to a drain line (22) and the nozzle (14) opens into the mixing channel (17) at an upstream end (17a) of the mixing channel (17).

5. Apparatus according to one of the preceding claims, **characterised in that** the expansion chamber (15) and the nozzle (14) are made of a thermally conductive material, in particular stainless steel.

6. Apparatus according to any one of claims 3 to 5, **characterized in that** the expansion chamber (15) with the nozzle (14) as well as the annular channel (16) and the mixing channel (17) are arranged in a reactor block (18), the reactor block (18) being made at least partly of plastic, in particular of PEEK, the expansion chamber (15) in particular being designed to be hollow-cylindrical and running in the axial direction in the reactor block (18).

7. Apparatus according to one of the preceding claims, **characterised in that** the diameter of the hollow-cylindrical expansion chamber (15) is larger than the cross-section of the pressurised gas line (4) and/or that the flow cross-section of the nozzle (14) is smaller than the diameter of the expansion chamber (15), preferably by at least a factor of 2.

8. Apparatus according to one of the preceding claims, **characterised in that** the pressure pulses (p) generated by a periodic opening and closing of the switching valve (5) expand in the expansion chamber (15) and are thereby damped, wherein the expansion chamber (15) and the nozzle (14) are acting as a damping member for the pressure pulses (p) introduced into the expansion chamber (15).

9. Apparatus according to one of the preceding claims, **characterised in that** the steam/gas mixture flowing out of the expansion chamber (15) through the nozzle (14) has a pressure curve p(t) over time with damped, periodically repeating pressure peaks (p0), in particular with pressure peaks (p0) flattened in a plateau shape, each pressure peak (p0) having in particular an exponentially decreasing pressure curve up to the pressure peak following in time.

10. Apparatus according to any one of the preceding claims, **characterised in that** the apparatus comprises a container (10) for holding the liquid and a mixing device (30) in communication with the steam line (6), the compressed gas line (4) and the container (10), the liquid and pulses of a steam/compressed gas mixture generated by the conveying means (3) being supplied to the mixing device (30) and mixed in the mixing device (30) for hot foaming of the liquid.

11. Device according to claim 10, **characterised in that** the container (10) is connected to the compressed gas line (4) via a branch line (12), the liquid stored in the container (10) being conveyed into the mixing device (30) by overpressure provided by the compressed gas source (2).

12. Apparatus according to claim 10, **characterized in that** the mixing device (30) comprises a first inlet (30a) for supplying the pulses of the steam/compressed gas mixture generated by the conveying means (3), a second inlet (30b) for supplying the liquid and an outlet (30c) for discharging the heated and foamed liquid, wherein the mixing device (30) is communicating with the container (10) via a liquid line (8).

13. Method for foaming a liquid, in particular a beverage, with pulses of a steam/compressed gas mixture, wherein, in order to generate pulses of the steam/compressed gas mixture, hot steam is supplied to a conveying means (3) via a steam line (6) and a compressed gas stream is supplied under a predetermined constant pressure via a compressed gas line (4), and pressure pulses (p) are generated from the compressed gas stream by means of a switching valve (5), **characterised in that** the pressure pulses (p) of the compressed gas flow are damped in the conveying means (3) by the interaction of an expansion chamber (15) and a nozzle (14) arranged at a downstream end of the expansion chamber (15).

14. Method according to claim 13, wherein the liquid is stored in a mixing vessel (11) and the steam/compressed gas mixture is introduced into the liquid via an immersion tube (22).

15. Method according to claim 13, **characterized in that** the liquid is stored in a container (10) and is led from the container (10) to a mixing device (30) in which the liquid is mixed with the steam/compressed gas mixture, the liquid stored in the container (10) preferably being conveyed into the mixing device (30) by overpressure provided by the compressed gas line (4).

## Revendications

1. Dispositif pour le chauffage et le moussage d'un liquide, en particulier d'une boisson, comprenant une conduite de vapeur (6) pouvant être reliée à un générateur de vapeur (1), une conduite de gaz comprimé (4) pouvant être reliée à une source de gaz comprimé (2) et un moyen de transport (3) relié à la conduite de vapeur (6) et à la conduite de gaz comprimé (4) pour la production et le transfert d'un mélange vapeur/gaz dans le liquide, ainsi qu'une soupape de commutation (5) commandable, dans lequel la vapeur chaude est amenée au moyen de transport (3) par l'intermédiaire de la conduite de vapeur (6) et un courant de gaz comprimé sous pression constante prédéfinie par l'intermédiaire de la conduite de gaz comprimé (4) et des impulsions de pression (p) sont produites à partir du courant de gaz comprimé au moyen de la soupape de commutation (5), **caractérisé en ce que** le moyen de transport (3) comprend une chambre d'expansion (15) servant à amortir les impulsions de pression (p) introduites avec une buse (14) disposée à l'extrémité aval de la chambre d'expansion (15).

2. Dispositif selon la revendication 1, **caractérisé en ce que** la soupape de commutation (5) peut être commandée à une fréquence (f) prédéfinie et produit des impulsions de pression (p) à partir du courant de gaz comprimé par ouverture et fermeture périodique à la fréquence (f) prédéfinie et les dirige dans la chambre d'expansion (15), dans lequel de préférence la fréquence d'impulsion (f) et/ou la durée d'impulsion (t0) et/ou l'amplitude (p0) des impulsions de pression produites par la soupape de commutation est réglable.

3. Dispositif selon la revendication 1 ou 2, **caractérisé en ce que** le moyen de transport (3) comprend un canal annulaire (16), lequel est disposé de manière coaxiale par rapport à la chambre d'expansion (15) réalisée de manière cylindrique et est relié à la conduite de vapeur (6).

4. Dispositif selon la revendication 2, dans lequel le canal annulaire (16) à une extrémité amont (16a) est relié à la conduite de vapeur (6) et à une extrémité aval (16b) à un canal de mélange (17) et l'extrémité aval du canal de mélange (17) est reliée à une conduite d'évacuation (22) et la buse (14) à une extrémité amont (17a) du canal de mélange (17) débouche dans le canal de mélange (17).

5. Dispositif selon l'une quelconque des revendications précédentes, **caractérisé en ce que** la chambre d'expansion (15) et la buse (14) sont fabriquées à partir d'un matériau thermo-conducteur, en particulier à partir d'acier inoxydable.

6. Dispositif selon l'une quelconque des revendications 3 à 5, **caractérisé en ce que** la chambre d'expansion (15) avec la buse (14) ainsi que le canal annulaire (16) et le canal de mélange (17) sont disposés dans un bloc réacteur (18), dans lequel le bloc réacteur (18) est fabriqué au moins en partie à partir de matière plastique, en particulier de PEEK, dans lequel la chambre d'expansion (15) est réalisée en particulier de manière cylindrique creuse et s'étend dans la direction axiale dans le bloc réacteur (18).

7. Dispositif selon l'une quelconque des revendications précédentes, **caractérisé en ce que** le diamètre de la chambre d'expansion (15) réalisée de manière cylindrique creuse est plus grand que le diamètre de la conduite de gaz comprimé (4) et/ou que la section transversale d'écoulement de la buse (14) est plus petite que le diamètre de la chambre d'expansion (15), de préférence d'au moins un facteur 2.

8. Dispositif selon l'une quelconque des revendications précédentes, **caractérisé en ce que** les impulsions de pression (p) produites par une ouverture et fermeture périodique de la soupape de commutation (5) sont en expansion dans la chambre d'expansion (15) et ainsi amorties, dans lequel la chambre d'expansion (15) et la buse (14) agissent en tant qu'élément d'amortissement pour les impulsions de pression (p) introduites dans la chambre d'expansion (15).

9. Dispositif selon l'une quelconque des revendications précédentes, **caractérisé en ce que** le mélange vapeur/gaz s'écoulant par la buse (14) à partir de la chambre d'expansion (15) présente une variation de pression dans le temps p(t) avec des pointes de pression (p0) amorties, se répétant de manière périodique, en particulier avec des pointes de pression (p0) aplaties en forme de plateau, dans lequel chaque pointe de pression (p0) jusqu'à la pointe de pression successive présente en particulier une variation de pression chutant de manière exponentielle.

10. Dispositif selon l'une quelconque des revendications précédentes, **caractérisé en ce que** le dispositif comprend un contenant (10) pour la réception du liquide ainsi qu'un système de mélange (30) relié à la conduite de vapeur (6), à la conduite de gaz comprimé (4) et au contenant (10), dans lequel le liquide et les impulsions d'un mélange vapeur/gaz comprimé produites par le moyen de transport (3) sont acheminées vers le système de mélange (30) et mélangées dans le système de mélange (30) pour le moussage chaud du liquide.

11. Dispositif selon la revendication 10, **caractérisé en ce que** le contenant (10) est relié à la conduite de gaz comprimé (4) par l'intermédiaire d'une conduite de ramification (12), dans lequel le liquide stocké dans le contenant (10) est transporté dans le système de mélange (30) par la surpression fournie par la source de gaz comprimé (2).

12. Dispositif selon la revendication 10, **caractérisé en ce que** le système de mélange (30) comprend une première entrée (30a) pour l'acheminement des impulsions du mélange vapeur/gaz comprimé produites par le moyen de transport (3), une deuxième entrée (30b) pour l'acheminement du liquide ainsi qu'une sortie (30c) pour l'évacuation du liquide chauffé et moussé, dans lequel le système de mélange (30) est relié au contenant (10) par l'intermédiaire d'une conduite de liquide (8).

13. Procédé pour le moussage d'un liquide, en particulier d'une boisson, avec les impulsions d'un mélange vapeur/gaz comprimé, dans lequel pour la production d'impulsions du mélange valeur/gaz comprimé de la vapeur chaude est amenée à un moyen de transport (3) par l'intermédiaire d'une conduite de vapeur (6) et un courant de gaz comprimé sous pression constante prédéfinie par l'intermédiaire d'une conduite de gaz comprimé (4) et des impulsions de pression (p) sont produites à partir du courant de gaz comprimé au moyen d'une soupape de commutation (5), **caractérisé en ce que** les impulsions de pression (p) du courant de gaz comprimé dans le moyen de transport (3) sont amorties par la coopération d'une chambre d'expansion (15) et d'une buse (14) disposée à une extrémité aval de la chambre d'expansion (15).

14. Procédé selon la revendication 13, dans lequel le liquide est stocké dans un contenant de mélange (11) et le mélange vapeur/gaz comprimé est introduit dans le liquide par l'intermédiaire d'un tube plongeur (22).

15. Procédé selon la revendication 13, **caractérisé en ce que** le liquide est stocké dans un contenant (10) et guidé à partir du contenant (10) vers un système de mélange (30), dans lequel le liquide est mélangé au mélange vapeur/gaz comprimé, dans lequel le liquide stocké dans le contenant (10) est transporté de préférence par la surpression fournie par la conduite de gaz comprimé (4) dans le système de mélange (30).
